# EUROPÄISCHE PATENTANMELDUNG

(11) **EP 1 854 935 A1**
(43) Veröffentlichungstag der Anmeldung: **14.11.2007**
(21) Anmeldenummer: 07009358.8
(22) Anmeldetag: 10.05.2007
(51) Int. Cl.: E04D 13/00, A01M 29/00

(54) **Vogelabweiser**

(30) Priorität: 10.05.2006 DE 102006021732
(71) Anmelder: HAUSprofi Bausysteme GmbH, 72250 Freudenstadt (DE)
(72) Erfinder: Fuchs, Marc, 67720 Hoerdt (FR)
(74) Vertreter: Kohler Schmid Möbus

(57) **Zusammenfassung**

Ein Vogelabweiser (1) umfasst eine erste (11) und eine zweite (12) Trägerleiste, die über quer zur Längsrichtung der Trägerleisten (11, 12) angeordnete Verbindungsstege (13a ...) verbunden sind. An jeweils einer der Trägerleisten (11, 12) sind quer zur Längsrichtung der Trägerleisten (11, 12) angeordnete Stäbe (14a ...) vorgesehen, welche beim Biegen des Vogelabweisers (1) gegen die Krümmung aufgerichtet werden.

## Beschreibung

Die Erfindung betrifft einen Vogelabweiser mit einer ersten and einer zweiten Trägerleiste, wobei die beiden Trägerleisten über quer zur Längsrichtung der Trägerleisten angeordnete Verbindungsstege verbunden sind.

Ein derartiger Vogelabweiser ist durch die DE 203 06 137 U1 bekannt geworden.

Vogelabweiser werden an Gebäudevorsprüngen, wie Fenstersimsen, angebracht, und dienen dort als Abwehreinrichtungen, die ein Niederlassen von Vögeln, wie Tauben, verhindern. Auf diese Weise werden Verunreinigungen von Hauswänden, Balkonen, Terrassen sowie Eingangsbereichen und Wegen durch herab fallenden Vogelkot vermieden.

Gemäß dem Stand der Technik sind Ausstanzungen vorgesehen, damit sich Zähne gegen die Krümmung beim Biegen des bekannten Vogelabweisers aufrichten können. Der Vogelabweiser erhält seine raumgreifende Form somit erst am Einsatzort.

Der Erfindung liegt die Aufgabe zugrunde, einen Vogelabweiser der bekannten Art leichter bauen zu können und zu vereinfachen.

Die Aufgabe wird durch einen Vogelabweiser gemäß Patentanspruch 1 gelöst.

Der Vogelabweiser ist aus einem korrosionsarmen, witterungsbeständigen Werkstoff bzw. Werkstoffen hergestellt. Hierzu bietet sich ein Kunststoff oder ein Metall an, aufgrund guter Materialverträglichkeit ist Edelstahl vorteilhaft. Die Stäbe sind bevorzugt als Dornen ausgebildet, sie laufen spitz zu oder weisen eine Verjüngung auf. Durch eine Verrundung am Ende eines jeden Stabes können zudem Verletzungen an den Vögeln vermieden werden.

Beim Aufstellen der Stäbe verbleiben die Verbindungsstege in ihrer ursprünglichen Lage, in einer Ebene mit erster und zweiter Trägerleiste, oder werden alternativ zeitgleich mitbewegt, das heißt selbst gebogen oder geknickt. Dabei können an den Verbindungsstegen Gelenke oder Scharniere vorgesehen sein. An jeder Trägerleiste ist mindestens eine Reihe an Stäben angebracht, wobei die Stäbe in Reihe äquidistant oder als Paare angeordnet sind. Der Abstand zwischen einzelnen Stäben ist dabei geringer als der Abstand zwischen einzelnen Stabpaaren. Sowohl die Stäbe in einer Reihe als auch die Stäbe verschiedener Reihen können unterschiedliche Längen aufweisen, wodurch die Funktionsweise des erfindungsgemäßen Vogelabweisers verbessert wird.

Diese Ausführungsform bietet sich zur Anordnung mehrerer Reihen an einer Trägerleiste an, wobei die einzelnen Reihen verschiedene Aufstellwinkel aufweisen. Auf diese Weise, insbesondere in Verbindung mit unterschiedlichen Stablängen, wird der erfindungsgemäße Vogelabweiser in seiner Wirkung verbessert. Darüberhinaus bietet sich eine Herstellung des Vogelabweisers aus unterschiedlichen Materialien an.

In einer bevorzugten Ausführungsform der Erfindung sind die Stäbe zumindest einer Reihe starr mit der ersten bzw. der zweiten Trägerleiste verbunden. Ein starrer Verbund zwischen Stab und Trägerleiste erlaubt eine Herstellung des Vogelabweisers als Biege- oder Knickteil, welches bevorzugt einstückig aus einem Material hergestellt ist. Bei einem derartigen Vogelabweiser mit zwei Trägerleisten werden beim Aufstellvorgang lediglich die Verbindungselemente gebogen bzw. geknickt. Der Aufstellvorgang der Stäbe ist meistens ein irreversibler Prozess, durch den der starre Verbund zwischen Stäben und Trägerleisten nicht beeinträchtigt, was eine hohe Stabilität der Stäbe sicherstellt. Darüberhinaus ergibt sich der fertigungstechnische Vorteil, dass nur die durch den Aufstellvorgang verformten Teile des Vogelabweisers bieg- bzw. knickbar hergestellt sein müssen. Ferner wird der Kraftaufwand beim Aufbiegen des Vogelabweisers verringert.

Weiter sind die Trägerleisten bevorzugt parallel angeordnet. Eine parallele Anordnung der Trägerleisten erlaubt eine kompakte Ausführung und somit geringen Platzbedarf bei Lagerung und Transport des erfindungsgemäßen Vogelabweisers.

In einer weiteren bevorzugten Ausführung der Erfindung sind die Stäbe gegenüberliegend oder versetzt zwischen der ersten und der zweiten Trägerleiste angeordnet, wobei die Gesamtlänge zweier gegenüberliegender Stäbe bzw. die Länge eines versetzt angeordneten Stabes kleiner als der Abstand zwischen den Trägerleisten ist. Im Herstellungszustand liegen die Stäbe in einer Ebene mit beiden Trägerleisten. Dadurch sind sie bei einer Lagerung und bei einem Transport geschützt. Die Länge der Stäbe ist geringer als der Abstand zwischen den bevorzugt parallelen Trägerleisten, so dass ein Stab weder einen gegenüberliegenden Stab noch die gegenüberliegende Trägerleiste überlappt. Bei einem starren Verbund zwischen Stäben und Trägerleisten werden im Aufstellvorgang zugleich die Stäbe aufgerichtet und die Trägerleisten verkippt. Der Vogelabweiser ist derart gestaltet, dass durch dieses Verkippen eine oder mehrere zur Befestigung vorgesehene Leisten bzw. entsprechende Teile der Trägerleisten in die Befestigungsebene gebracht werden. Der erfindungsgemäße Vogelabweiser wird mit Hilfe eines Befestigungsmittels wie Kleber, Schrauben, Nieten, Klemmen an einer Befestigungsfläche bzw. an einem Befestigungsort angebracht. Zu diesem Zwecke können an dem Vogelabweiser Löcher für Schrauben oder Nieten und/oder Klemmen vorgesehen sein.

Bevorzugte Ausführungsbeispiele sind in der Zeichnung schematisch dargestellt. Es zeigt:
- Fig. 1: eine Draufsicht auf einen Vogelabstreifer im Herstellungszustand;
- Fig. 2: eine perspektivische Darstellung eines Vogelabweisers in halb aufgeklappter Stellung.

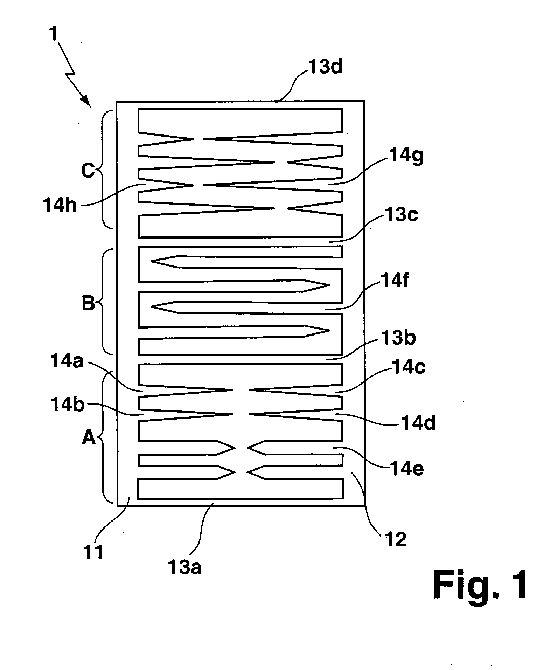

Fig. 1 zeigt in Draufsicht einen erfindungsgemäßen Vogelabweiser 1 im Herstellungszustand. Der Vogelabweiser 1 bildet im Herstellungszustand eine flache Einheit und kann somit raumsparend gelagert und transportiert werden. Der Vogelabweiser 1 weist auf der linken Seite eine erste Trägerleiste 11, auf der rechten Seite eine zweite Trägerleiste 12 auf. Die erste Trägerleiste 11 und die zweite Trägerleiste 12 sind über in regelmäßigen Abständen angeordnete Verbindungsstege 13a, 13b, 13c, 13d miteinander verbunden, wobei die Verbindungsstege 13a und 13d den jeweiligen Abschluss des länglichen Vogelabweisers bilden. Die Verbindungsstege 13a, 13b, 13c, 13d sind dünn ausgeführt, so dass sie leicht verbogen werden können. Alternativ können ein oder mehrere Gelenke an jedem Verbindungssteg 13a, 13b, ... vorgesehen sein. An den Trägerleisten 11, 12 sind jeweils eine Reihe länglicher Stäbe 14a, 14b, 14c, ... in starrem Verbund angebracht. Im gezeigten Fertigungszustand des Vogelabweisers 1 sind die Stäbe 14a, 14b, 14c, ... zwischen beiden Trägerleisten 11, 12 angeordnet und liegen flach in einer durch die Trägerleisten 11, 12 festgelegten Ebene.

Im Bereich A zwischen dem Verbindungssteg 13a und dem Verbindungssteg 13b sind Paare gleichlanger Stäbe einander gegenüberliegend angeordnet. Einem an der ersten Trägerleiste 11 vorgesehenen Paar zweier Stäbe 14a, 14b liegt ein der zweiten Trägerleiste 12 zugeordnetes Paar zweier Stäbe 14c, 14d gegenüber. Die gegenüberliegenden Stäbe 14a, 14b, 14c, 14d laufen auf ihrer gesamten Länge spitz zu. Die Stäbe eines weiteren Stabpaares im Bereich A weisen wie ein neben dem Stab 14d angeordneter Stab 14e eine abgerundete Spitze auf. Im Bereich B zwischen den Verbindungsstegen 13b und 13c sind Stäbe versetzt zueinander angeordnet, wobei die Länge eines einzelnen Stabes knapp unterhalb des Abstandes zwischen der ersten Trägerleiste 11 und der zweiten Trägerleiste 12 liegt. Die Stäbe weisen wie Stab 14f eine Verjüngung am Stabende auf. Im Bereich C zwischen dem Verbindungssteg 13c und dem Verbindungssteg 13d sind Stäbe wiederum als Paare angeordnet, wobei die Stäbe eines Paares unterschiedliche Längen aufweisen. Die Gesamtlänge zweier gegenüberliegender Stäbe wie 14h und 14g überschreitet zusammengenommen nicht den Abstand zwischen den Trägerleisten 11, 12, so dass sich gegenüberliegenden Stäbe nicht überlappen.

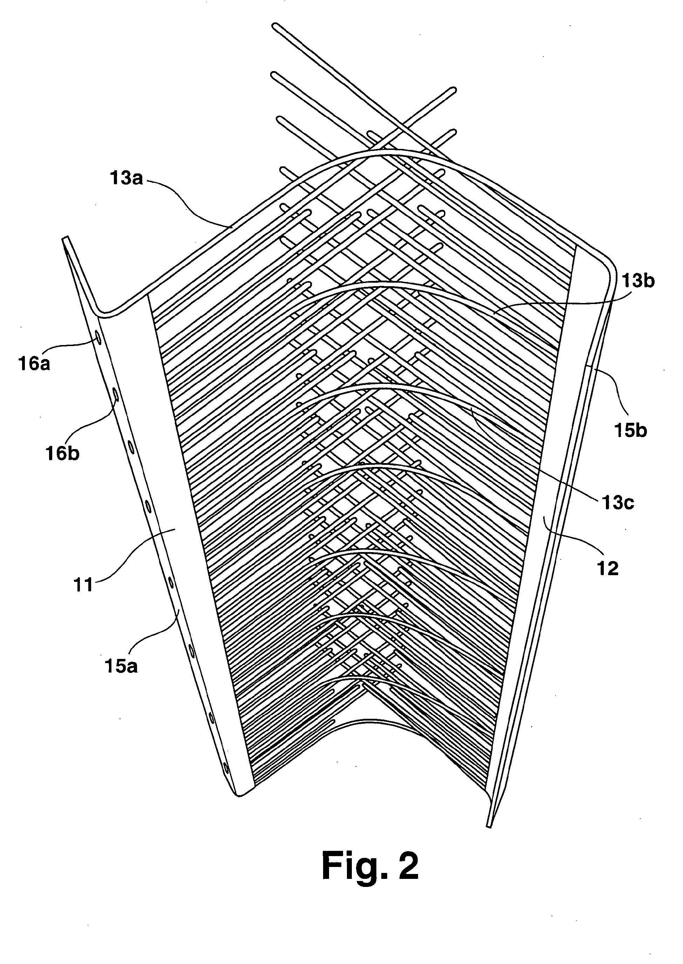

Fig. 2 zeigt aus einer Perspektive von schräg unten den beispielhaften Vogelabweiser 1 in halb aufgeklappter Stellung. Durch Verbiegen des im Herstellungszustand flachen Vogelabweisers 1 sind die Verbindungsstege 13a, 13b, ... nach oben gebogen und die Stäbe auf der durch die erste Trägerleiste 11 und die zweite Trägerleiste 12 festgelegten Ebene nach oben gestellt. Die Figur veranschaulicht, dass die Position der Trägerleisten 11, 12 durch den Aufklappvorgang derart verändert wird, dass sie sich auch aus einer Befestigungsebene des Vogelabweisers 1 lösen. Zur Befestigung des Vogelabweisers 1 sind Befestigungsleisten 15a, 15b vorgesehen, die von der entsprechenden Trägerleiste 11, 12 abknicken. Die Befestigungsleisten 15a, 15b weisen Löcher 16a, 16b, ... zum Durchtritt von Schrauben oder Nieten auf.

In der gezeigten Ausführungsform wird der Vogelabweiser 1 vor Montage in die Gebrauchsstellung gebracht. Bei einer gelenk- oder scharnierartigen Anbringung der Stäbe 14a, 14b, ... an den Trägerleisten 11, 12 kann diese Aufstellung auch nach Montage des Vogelabweisers 1 erfolgen, da bei einer derartigen Ausführung die Trägerleiste selbst als Befestigungsleiste fungiert. An den Trägerleisten 11, 12 können mehrere Reihen von Stäben 14a, 14b, ..., insbesondere von Stäben unterschiedlicher Länge, vorgesehen sein. Hierbei sind versetzt und/oder gegenüberliegend angeordnete Reihen denkbar. Darüber hinaus können für einzelne Reihen unterschiedliche Aufstellwinkel sowie unterschiedliche Aufklappmechanismen gewählt

## Patentansprüche

1. Vogelabweiser (1) mit einer ersten (11) und einer zweiten (12) Trägerleiste, wobei die beiden Trägerleisten (11, 12) über quer zur Längsrichtung der Trägerleisten (11, 12) angeordnete Verbindungsstege (13a ...) verbunden sind, **dadurch gekennzeichnet, dass** an jeweils einer der Trägerleisten (11, 12) quer zur Längsrichtung der Trägerleisten (11, 12) angeordnete Stäbe (14a ...) vorgesehen sind, welche beim Biegen des Vogelabweisers (1) gegen die Krümmung aufgerichtet werden.
